# FASCICULE DE BREVET EUROPEEN

(11) **EP 2 088 018 B1**
(45) Date de publication et mention de la délivrance du brevet: **10.04.2013**
(21) Numéro de dépôt: 09152329.0
(22) Date de dépôt: 06.02.2009
(51) Int. Cl.: B60J 1/20, B60J 7/00

(54) **Toile élastique pour store d'occultation, store d'occultation et véhicule automobile correspondants**
Elastische Plane für Verdeckrollo, entsprechendes Verdeckrollo und Kraftfahrzeug
Elastic fabric for a concealment blind, corresponding concealment blind and automobile

(30) Priorité: 06.02.2008 FR 0850764; 23.05.2008 FR 0853382
(43) Date de publication de la demande: 12.08.2009
(73) Titulaire: Advanced Comfort Systems France SAS - ACS France, 79300 Bressuire (FR); R.E.S. S.P.A., 31022 Preganziol (TV) (IT)
(72) Inventeur: Spinelli, Giuseppe, 31022 Preganziol (IT); Grolleau Robin, Anne, 79300 Bressuire (FR); Muller, Nicolas, 67210 Obernai (FR); Gerbeau, Serge, 79300 Saint Sauveur (FR); Neaux, Jean-Claude, 79300 Terves (FR)
(74) Mandataire: Bioret, Ludovic

(56) Documents cités:
- EP-A- 0 369 080
- EP-A1- 1 199 160
- DE-A1- 10 215 322
- DE-U1-202004 016 624
- US-A- 4 671 558
- US-A1- 2007 102 123

## Description

Le domaine de l'invention est celui des équipements pour véhicule automobile.

Plus précisément, l'invention concerne les dispositifs d'occultation d'une surface vitrée du véhicule, à l'aide d'une ou plusieurs toiles mobiles entre une position repliée et au moins une position dépliée, dans laquelle la toile occulte au moins en partie une surface vitrée.

L'invention s'applique notamment aux stores d'occultation comprenant une toile montée sur un, ou le cas échéant plusieurs, tube à enrouleur. Ces mécanismes peuvent être à déplacement manuel ou motorisé.

Un domaine particulier, mais non exclusif, de l'invention, est celui des stores de pavillon vitré.

De nombreux véhicules sont, actuellement, équipés de pavillons partiellement ou intégralement vitrés. On comprend que, dans ce cas, il est nécessaire de prévoir des moyens d'occultation pour protéger du soleil et de la lumière les occupants du véhicule. On a proposé, pour ces pavillons vitrés, différents systèmes d'occultation, et notamment des systèmes à base de store monté sur enrouleur.

Un inconvénient de ces stores est que sous l'effet de la pesanteur, la toile a tendance à se déformer et à « pocher ». En effet, le store s'étend dans un plan sensiblement horizontal (et, plus précisément, suivant la forme du pavillon) et sur toute la largeur de ce pavillon. Le problème est généralement augmenté par la forme du pavillon qui présente un ou deux galbes, dans le sens de la longueur et/ou de la largeur du véhicule.

Pour lutter contre ce phénomène, on a proposé d'équiper les toiles d'occultation d'une ou plusieurs baleines, s'étendant généralement perpendiculairement à l'axe de déploiement de la toile, et permettant de maintenir celle-ci dans la position souhaitée, si nécessaire avec un galbe.

On a également envisagé de rigidifier la toile, en y ajoutant une grille, par exemple en fibres de verre.

Ceci n'apparaît pourtant pas suffisant en pratique, et l'on constate souvent des plis, des pochages, ou des festonnages, notamment au voisinage des baleines, sur les bords latéraux de la toile.

D'une façon générale, et plus encore pour les véhicules automobiles haut de gamme, l'aspect intérieur du véhicule s'avère souvent déterminant pour la perception de confort, et peut être, en conséquence, un critère de choix au moment de l'achat.

De la même façon, l'aspect trop souple d'une toile classique, par exemple au toucher, serait pris comme un signe de mauvaise qualité apparente, et nuirait à l'appréciation du véhicule.

Une solution évidente a priori, pour l'homme du métier, est d'augmenter la rigidité de la toile. Notamment, les inventeurs ont tenté d'augmenter l'épaisseur et donc le poids de la toile pour obtenir une meilleure rigidité du tissu et ainsi éliminer les défauts d'aspects, tels que les ondulations et festonnages.

Par exemple, la demande de brevet EP-1 199 160 A1 divulgue un rideau de store formé d'un empilement d'au moins trois couches dont :
- une couche assortie au revêtement intérieur du véhicule ;
- une couche de rigidification ;
- une couche opacifiante, destinée à empêcher ou limiter le passage de la lumière.

Bien que ceci améliore légèrement la tenue de la toile, il apparaît que cette approche n'est pas suffisant et, qu'en outre, la toile ainsi rigidifiée pose d'autres problèmes (dus notamment au poids et à l'épaisseur).

L'invention a notamment pour objectif de pallier ces inconvénients de l'art antérieur.

Plus précisément, un objectif de l'invention est de fournir une toile de store d'occultation, notamment pour pavillon, qui limite, et si possible supprime, les effets d'ondulation, de pli, de pochage ou de festonnage.

Un autre objectif de l'invention est de fournir une telle toile qui présente de bonnes qualités d'occultation et de manipulation (enroulement et déroulement autour d'un tube enrouleur).

L'invention a encore pour objectif de fournir une telle toile, qui reste relativement facile à fabriquer, et d'un coût acceptable.

Encore un autre objectif de l'invention est de proposer un rideau de store de protection notamment contre les effets du soleil (rayonnements ultraviolets en particulier), et un store correspondant, qui s'harmonise tant sur le plan des couleurs que des textures avec son environnement, tout en présentant une bonne tenue mécanique, que ce soit pour son aspect (planéité) en position déployée, pour sa résistance mécanique et son module d'élasticité aux opérations successives d'enroulement et de déroulement ainsi qu'aux déformations intempestives.

Un autre objectif de l'invention est de fournir un tel rideau qui soit peu coûteux et facile à mettre en oeuvre sur différents types de stores à enrouleur.

L'invention a également pour objectif de fournir au moins un procédé de fabrication d'un tel rideau.

Ces objectifs, ainsi que d'autres qui apparaîtront par la suite, sont atteints à l'aide d'une toile pour store d'occultation d'une surface vitrée d'un véhicule automobile, comprenant au moins trois couches parmi lesquelles :
- une couche extérieure de protection, renvoyant et/ou absorbant les rayons lumineux, destinée à être orientée vers l'extérieur dudit véhicule (on parlera également de couche opacifiante destinée à empêcher ou limiter le passage de la lumière) ;
- une couche intérieure d'habillage (ou couche de décoration), destinée à être orientée vers l'intérieur dudit véhicule et éventuellement assortie au revêtement intérieur du véhicule ;
- au moins une couche intermédiaire, dite couche de rigidification élastique.

Selon l'invention, au moins une desdites couches intermédiaires présente une élasticité dans la direction de déploiement de ladite toile.

Ainsi, l'approche de l'invention s'oppose à la démarche évidente pour l'homme du métier, consistant à augmenter la rigidité de la toile. Au contraire, elle propose de réduire la rigidité de la toile, en augmentant les degrés de liberté, dans les mouvements de la toile, au moins dans le sens de déplacement de celle-ci.

Il est à noter que cette approche n'était pas évidente en soi, ne serait-ce que parce qu'une toile élastique présente, à l'état libre, une tenue inacceptable pour sa mise en oeuvre sur un store. Des moyens procurant une tension appropriée sont à prévoir, dans le store, pour supprimer ces défauts de la toile à l'état libre.

De façon avantageuse, au moins une desdites couches présente une élasticité dans deux directions perpendiculaires dites respectivement direction de trame et direction de chaîne.

Selon l'invention, ladite couche intérieure est élastique.

Celle-ci est réalisée en un matériau élastique.

L'élasticité de ladite couche intérieure est due, au moins en partie, au tricotage de ladite couche.

Le produit peut notamment être un textile tricoté dont la particularité est conférée notamment par l'élasticité du fil et du tricot.

Avantageusement, au moins une desdites couches intermédiaires est une grille.

Selon un deuxième mode de réalisation particulier de l'invention, ladite grille est réalisée dans un matériau élastique, et par exemple en polyester ou en polyéthersulfone.

Il est à noter que cette approche va à l'encontre de la technique de l'art antérieur, qui prévoit que cette grille doit être rigide. L'élasticité peut également être assurée, au moins en partie, par l'entrelacement des mailles.

Selon une mise en oeuvre particulière, ladite grille est un tricot en maille cueillie.

Selon un mode de fabrication particulier, ladite toile est fabriquée par lamination.

Selon un autre mode de fabrication, ladite toile est fabriquée par induction.

Ladite toile peut notamment présenter 3, 4 ou 5 couches. Dans ce dernier cas, elle comprend par exemple une couche tournée vers l'extérieur du véhicule, en polyuréthane, une première couche de collage, une grille, une seconde couche de collage et un tissu d'aspect.

L'invention concerne également les stores d'occultation pour véhicule automobile comprenant au moins une toile telle que décrite précédemment.

Avantageusement, un tel store comprend des moyens d'application d'une tension prédéterminée à ladite toile, au moins dans la direction de déploiement de ladite toile.

Ceci peut notamment être obtenu par une tension entre une barre de tirage et un tube enrouleur.

Un tel store peut comprendre au moins une baleine de maintien de ladite toile.

La toile élastique permet de supprimer les plis et le festonnage au voisinage de cette baleine.

L'invention concerne encore les véhicules automobiles comprenant au moins un store d'occultation d'une surface vitrée comprenant au moins une toile telle que décrite précédemment.

En d'autres termes, on obtient ainsi un moyen d'occultation dont le côté apparent de l'intérieur du véhicule peut être assorti au revêtement du reste du véhicule, tout en présentant des propriétés mécaniques et/ou de protection contre les ultraviolets appropriées.

De façon avantageuse, le rideau comprend en outre, une couche de neutralisation ou d'atténuation de la modification de l'aspect et/ou de la couleur de ladite couche assortie au revêtement induite par ledit matériau opacifiant.

On peut, grâce à cette disposition, compenser l'effet de la couleur de la couche opacifiante susceptible de transparaître au travers des deux autres couches.

Cette caractéristique est particulièrement utile lorsque la couche assortie au revêtement et la couche opacifiante ont des couleurs très différente (l'une étant sombre et l'autre claire, ou inversement).

Préférentiellement, ladite couche assortie au revêtement est réalisée dans un matériau tissé gratté, tel que du jersey.

Ce matériau est couramment utilisé comme revêtement intérieur dans les véhicules. Il est, bien entendu, que d'autres matières similaires peuvent être envisagées, toujours dans le but de s'accorder au mieux avec le revêtement déjà utilisé dans le véhicule.

Selon un mode de réalisation avantageux, ladite couche de rigidification élastique forme une grille.

Cette grille peut être par exemple un textile, type Soave (marque déposée) tel que décrit ci-après, ou en tout autre matériau présentant des propriétés mécaniques adaptées.

Avantageusement, ladite couche opacifiante comprend un film polyuréthane.

Préférentiellement, ladite couche opacifiante présente une couleur sombre, de préférence noire, qui offre un bon pouvoir opacifiant combiné à une bonne tenue en température avec ce type de couleur.

Selon une autre caractéristique avantageuse, ladite couche de neutralisation présente une couleur claire, de préférence blanche.

Cette couleur neutralise, au moins en partie, les effets de la couleur sombre de la couche opacifiante susceptibles d'être visible de l'intérieur du véhicule, ou d'assombrir la couche visible.

Toutefois, en fonction des couleurs de la couche assortie au revêtement d'une part, de la couche opacifiante d'autre part, d'autres couleurs peuvent être choisies pour la couche de neutralisation.

De façon avantageuse, ladite couche de neutralisation comprend un film polyuréthane. On peut ainsi envisager fabriquer les couches opacifiante et de neutralisation simultanément, par co-extrusion.

Dans au moins un mode de réalisation, la couche de décoration est avantageusement un tissu gratté ou piquet, en particulier du jersey, couramment utilisé pour la décoration des voitures, et notamment du pavillon. Le jersey présente l'avantage de fournir une présentation homogène avec le revêtement du reste de l'habitacle. Cependant, il s'agit d'un tissu relativement fin et souple. En conséquence, il présente les inconvénients de : ne procurer qu'un très faible pouvoir occultant ; présenter des propriétés mécaniques inappropriées (souplesse et élasticité, en particulier dans le sens de la trame) pour se maintenir de façon autonome selon une configuration plane en position déployée (à terme, les bords d'une telle toile s'incurvent de façon particulièrement inesthétique), ainsi que pour résister à des enroulements/déroulements successifs et à des déformations intempestives.

Dans au moins un mode de réalisation de l'invention, la couche de décoration est associée à une couche de rigidification élastique et à une couche d'opacification.

L'invention concerne également le procédé de fabrication d'un rideau tel que décrit ci-dessus.

Selon un mode de mise en oeuvre, ce procédé comprend les étapes suivantes : co-extrusion de deux films opacifiant et neutralisant ; fixation par collage de ladite couche assortie au revêtement avec ladite couche de rigidification élastique ; fixation par thermo-fusion desdits films sur ladite couche de rigidification, le film opacifiant étant placé de façon qu'il reste apparent.

D'autres caractéristiques et avantages de l'invention apparaîtront plus clairement à la lecture de la description suivante de modes de réalisation préférentiels de l'invention, donnés à titre de simples exemples illustratifs et non limitatifs et des figures annexées parmi lesquelles :
- la figure 1 illustre un exemple de store selon l'invention, mettant en oeuvre une toile élastique dans deux directions ;
- la figure 2 présente, schématiquement, les différentes couches d'un exemple de toile à cinq couches selon l'invention.

L'invention repose donc sur la mise en oeuvre d'une toile d'occultation présentant une élasticité, effective dans la direction trame et/ou la direction chaîne.

Une telle toile est notamment bien adaptée pour l'occultation totale d'un pavillon vitré.

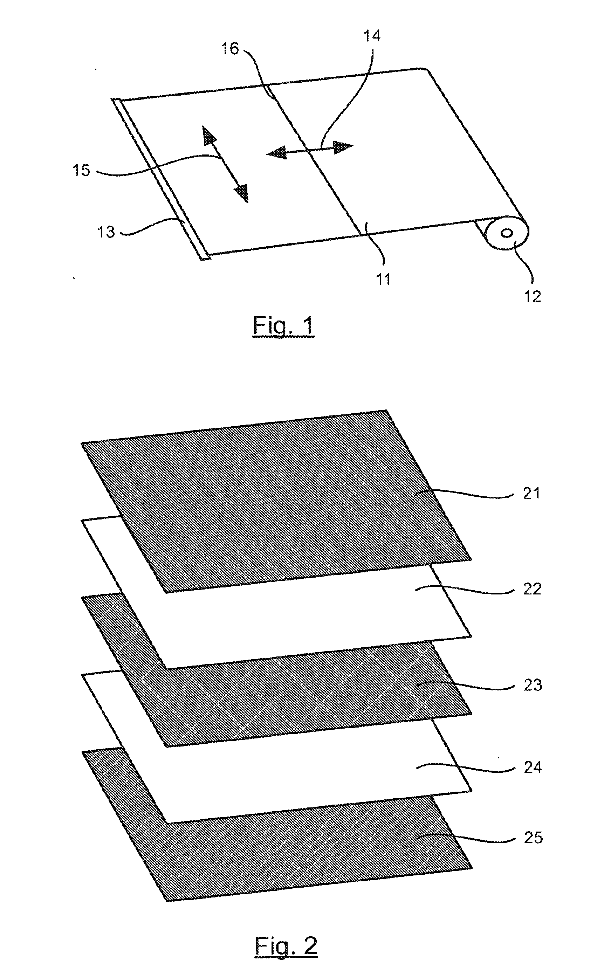

La figure 1 illustre, schématiquement, un store équipé d'une telle toile. Ce store comprend une toile 11 montée sur un tube enrouleur 12 et entraîné par une barre de tirage 13. Selon les cas, l'entraînement de cette barre de tirage peut être manuel, ou motorisé.

Du fait que cette toile est destinée à un pavillon, elle est avantageusement équipée d'une ou plusieurs baleines 16, qui maintiennent la toile dans une position prédéterminée. Cette baleine peut être le cas échéant galbée, selon plusieurs techniques connues en soi.

Selon l'invention, la toile 11 est élastique dans deux directions perpendiculaires 14 et 15. Dans un mode de réalisation simplifié, la toile peut n'être élastique que dans la direction 14, ou le cas échéant dans la direction 15.

La barre de tirage, et ses moyens de blocage, et/ou le tube enrouleur, sont conçus de façon à imprimer à la toile une tension prédéterminée, permettant d'exploiter l'élasticité, notamment dans la direction 14. D'autres moyens sont bien sûr envisageables, pour assurer cette tension. Notamment, dans la direction 15, la toile peut être solidaire d'une baguette ou d'un câble formant moyens de guidage et de maintien, et/ou monté dans un rail.

La tension appliquée à la toile doit être suffisante pour procurer une bonne tenue du tissu, tout en étant inférieure à une tension qui provoquerait l'allongement maximal que peut supporter le tissu. Ainsi, ce dernier conserve une aptitude à absorber les contraintes qui lui sont appliquées, en s'allongeant localement.

De cette façon, les défauts d'aspects, notamment au voisinage de la baleine 16, sont supprimés.

Préférentiellement, l'élasticité est choisie de façon à entraîner les allongements suivants :
- sous 5 daN :
   - _{ν} sens trame :: - moyenne : 35% ;
   - plage : 25 à 35% ;
   - _{ν} sens chaîne :: - moyenne : 14% ;
   - plage : 4 à 25% ;

   - sous 10 daN :
      - _{ν} sens trame :: - moyenne : 56% ;
      - plage : 50 à 65% ;
      - _{ν} sens chaîne :: - moyenne : 30% ;
      - plage: 12 à 50%.

La toile 11 est un complexage de plusieurs couches (par exemple de 3 à 5 couches), qui peut notamment être réalisé par lamination ou par induction.

Selon un premier mode de réalisation, l'élasticité du complexage peut être obtenu par une élasticité de la couche dirigée vers l'intérieur du véhicule ou tissu d'aspect, qui peut notamment être du jersey.

Cette approche peut notamment être appliquée au cas d'un complexage réalisé en trois couches (une couche extérieur de protection, une couche de collage et une couche intérieure d'habillage, ou tissu d'aspect, par exemple). Dans ce cas, l'élasticité du tissu d'aspect peut être obtenu par le tricotage de ce dernier et/ou par l'élasticité du matériau utilisé.

Selon un autre mode de réalisation, illustré par la figure 2 dans le cas d'une toile formée de cinq couches, l'élasticité peut être assurée par une couche intermédiaire définissant une grille.

Plus précisément, la toile, ou complexage, de la figure 2 (sur laquelle les couches sont présentées séparées dans un souci d'illustration) comprend :
- une couche de protection 21 dirigée vers l'extérieur du véhicule, ou couche de protection, par exemple en polyuréthane, destinée à renvoyer les rayons du soleil et assurer l'occultation ou l'opacité ;
- une première couche intermédiaire de collage 22 ;
- une grille de rigidification 23 ;
- une seconde couche intermédiaire de collage 24 ;
- une couche d'habillage, ou tissu d'aspect 25, par exemple en jersey, qui est avantageusement assorti à la garniture intérieure du véhicule.

Selon l'art antérieur, la grille 23 est une grille rigide, par exemple en fibres de verre. Selon l'invention, dans ce mode de réalisation, on propose en revanche que cette grille présente une élasticité adaptée, tout en assurant le maintien souhaité de la toile. Elle est par exemple réalisée en polyester.

Une telle grille peut notamment être formée par un tissu maille (plus précisément, un tricot en maille cueillie) issu par exemple d'un métier circulaire multichutes, chaque chute étant alimentée par un seul fil.

L'élasticité de la grille est assurée par la structure (entrelacement des mailles). L'armure pour ce tricot est un Jersey (marque déposée).

La jauge (nombre d'aiguilles dans 25,4 mm) est par exemple de 30 ou 32.

Le fil utilisé n'est pas, dans ce mode de réalisation, élastique, mais il influence l'élasticité du tricot par les frottements interfils qui dépendent notamment de la matière, la torsion appliquée et la pilosité du fil.

Le fil peut être multi-filamentaire plat, c'est-à-dire ne présentant pas de torsion.

Le matériau utilisé pour la grille peut être une matière plastique telle que le polyéthersulfone (PES), dont les caractéristiques principales sont, dans un mode de réalisation particulier :
- poids 60 gr/m2 ± 10%
- force à la rupture chaîne ≥ 00 N/5cm ;
- force à la rupture trame ≥ 120 N/5cm ;
- allongement à la rupture chaîne ≥ 50 % ;
- allongement à la rupture trame ≥ 200 % ;
- allongement à 50% chaîne ≥ 5 N/5cm ± 30% ;
- allongement à 50% trame : ≥ 200 N/5 cm ± 20%.

Le produit peut être un textile tricoté dont la particularité est conférée notamment par l'élasticité du fil et du tricot. Les caractéristiques de ce produit sont par exemple :
- Largeur (cm) > 180 ;
- Poids (g/m2) 60± 20% ;
- Allongement trame 50% (Kg) < 1 ;
- Allongement chaîne 50% (Kg) 15 < F < 25 ;
- Charge à la rupture trame (Kg) > 10 ;
- Allongement à la rupture trame( %) > 150 ;
- Charge à la rupture chaîne (Kg) > 30 ;
- Allongement à la rupture chaîne (%) > 50.

On présente, en annexe, les caractéristiques de quatre autres exemples de toiles selon l'invention :
- annexe 1 : toile élastique 3 couches 40 MY ;
- annexe 2 : toile élastique 3 couches 80 MY ;
- annexe 3 : toile élastique 4 couches avec grille ;
- annexe 4 : toile élastique 5 couches avec grille.

Une telle toile élastique selon l'invention peut également être utilisée pour d'autres applications, et par exemple pour le revêtement intérieur de certaines parties d'un véhicule.

On présente par ailleurs, en annexes 5 et 6, les caractéristiques d'une couche intermédiaire qui est une grille textile, de type Soave, de rigidification élastique. En d'autres termes, cette grille assure la rigidité de la toile et donne également de l'élasticité à cette même toile. La grille est un textile tricoté dont la particularité est conférée notamment par l'élasticité du fil et du tricot.

### ANNEXE 1 : TOILE T7 ELASTIQUE 3 COUCHES PBT BLACK OUT 40

| **Caractéristique** | | | **Valeur Standard** | **Valeur Calculée** | **UM** | **Méthode** |
|---|---|---|---|---|---|---|
| **EPAISSEUR** | | | min max | 0,62 | mm | **IL 824.38** |
| **POIDS** | | | min max | 187 | g/m² | **D45 1012** |
| **SOUPLESSE A LA BOUCLE** | | | min max | | | **D45 1030** |
| **ADHESION TISSU TRAME** | | | ≥ | INDECO LABLE | DaN/5cm | **IL 824.33** |
| **ADHESION FILM TRAME** | | | ≥ | | DaN/5m | **IL 824.33** |
| **ADHESION TISSU CHAINE** | | | ≥ | INDECO LABLE | DaN/5cm | **IL 824.33** |
| **ADHESION FILM CHAINE** | | | ≥ | | DaN/5cm | **IL 824.33** |
| | | | | | | |
| **RESISTANCE A LA RUPTURE TRAME** | | | ≥ | 25,541 | DaN | **D41 1029** |
| **ALLONGEMENT A LA RUPTURE TRAME** | | | ≤ | 111,8 | % | **D41 1029** |
| **RESISTANCE A LA RUPTURE CHAINE** | | | ≥ | 32,91 | DaN | **D41 1029** |
| **ALLONGEMENT A LA RUPTURE CHAINE** | | | ≤ | 83,8 | % | **D41 1029** |
| **ALLONGEMENT SOUS 5 daN TRAME** | | | ≤ | 37,6 | % | **D41 1029** |
| **ALLONGEMENT SOUS 5 daN CHAINE** | | | ≤ | 18,54 | % | **D41 1029** |
| **ALLONGEMENT SOUS 10 daN TRAME** | | | ≤ | 61,47 | % | **D41 1029** |
| **ALLONGEMENT SOUS 10 daN CHAINE** | | | ≤ | 39,61 | % | **D41 1029** |
| **DECHIREMENT TRAME** | | | ≥ | 2,3 | DaN | **D45 1126** |
| **DECHIREMENT CHAINE** | | | ≥ | 2,1 | DaN | **D45 1126** |
| **COLORIS** | | | ETALON | LAMA B14 | | **IL 824.22** |
| **COMBUSTIBILITE TRAME** | 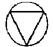 | **R** | ≤ | B | mm/mn | **D45 1333** |
| **CUOMBUSTIBILITE CHAINE** | 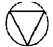 | **R** | ≤ | B | mm/mn | **D45 1333** |

### ANNEXE 2 : TOILE T7 ELASTIQUE 3 COUCHES PBT BLACK OUT 80 MY

| **Caractéristique** | | | **Valeur Standard** | **Valeur Calculée** | **UM** | **Méthode** |
|---|---|---|---|---|---|---|
| **EPAISSEUR** | | | min max | 0,62 | mm | **IL 824.38** |
| **POIDS** | | | min max | 240 | g/m² | **D45 1012** |
| **SOUPLESSE A LA BOUCLE** | | | min max | | | **D45 1030** |
| **ADHESION TISSUE TRAME** | | | > | 3,2 | DaN/5c m | **IL 824.33** |
| **ADHESION FILM TRAME** | | | ≥ | | DaN/5c m | **IL 824.33** |
| **ADHESION TISSU CHAINE** | | | ≥ | 2,7 | DaN/5c m | **IL 824.33** |
| **ADHESION FILM CHAINE** | | | ≥ | | DaN/5c m | **IL 824.33** |
| **RESISTANCE A LA RUPTURE TRAME** | | | ≥ | 28,61 | DaN | **D41 1029** |
| **ALLONGEMENT A LA RUPTURE TRAME** | | | ≤ | 114,2 | % | **D41 1029** |
| **RESISTANCE A LA RUPTURE CHAINE** | | | ≥ | 32,93 | DaN | **D41 1029** |
| **ALLONGEMENT A LA RUPTURE CHAINE** | | | ≤ | 99,3 | % | **D41 1029** |
| **ALLONGEMENT SOUS 5 daN TRAME** | | | ≤ | 26,93 | % | **D41 1029** |
| **ALLONGEMENT SOUS 5 daN CHAINE** | | | ≤ | 22,47 | % | **D41 1029** |
| **ALLONGEMENT SOUS 10 daN TRAME** | | | ≤ | 48,98 | % | **D41 1029** |
| **ALLONGEMENT SOUS 10 daN CHAINE** | | | ≤ | 48,33 | % | **D41 1029** |
| **DECHIREMENT TRAME** | | | ≥ | 4 | DaN | **D45 1126** |
| **DECHIREMENT CHAINE** | | | ≥ | 2,9 | DaN | **D45 1126** |
| **COLORIS** | | | ETALON | LAMA B14 | | **IL 824.22** |
| **COMBUSTIBILITE TRAME** | 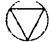 | R | ≤ | B | mm/mn | **D45 1333** |
| **COMBUSTIBILITE CHAINE** | 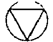 | R | ≤ | D 117,68 | mm/mn | **D45 1333** |

### ANNEXE 3 : TOILE T7 ELASTIQUE 4 COUCHES A GRILLE (SOAVE)

| **Caractéristique** | | | **Valeur Standard** | **Valeur Calculée** | **UM** | **Méthode** |
|---|---|---|---|---|---|---|
| **EPAISSEUR** | | | min max | 0,99 | mm | **IL 824.38** |
| **POIDS** | | | min max | 236 | g/m² | **D45 1012** |
| **SOUPLESSE A LA BOUCLE** | | | min max | | | **D45 1030** |
| **ADHESION TISSU TRAME** | | | ≥ | 1,5 | DaN/5c m | **IL 824.33** |
| **ADHESION FILM TRAME** | | | ≥ | 0,7 | DaN/5c m | **IL 824.33** |
| **ADHESION TISSU CHAINE** | | | ≥ | 1,1 | DaN/5c m | **IL 824.33** |
| **ADHESION FILM CHAINE** | | | ≥ | 1,4 | DaN/5c m | **IL 824.33** |
| **RESISTANCE A LA RUPTURE TRAME** | | | ≥ | 34,32 | DaN | **D41 1029** |
| **ALLONGEMENT A LA RUPTURE TRAME** | | | < | 131,2 | % | **D41 1029** |
| **RESISTANCE A LA RUPTURE CHAINE** | | | ≥ | 56,22 | DaN | **D41 1029** |
| **ALLONGEMENT A LA RUPTURE CHAINE** | | | < | 76,9 | % | **D41 1029** |
| **ALLONGEMENT SOUS** 5 **daN TRAME** | | | < | 44,76 | % | **D41 1029** |
| **ALLONGEMENT SOUS 5 daN CHAINE** | | | < | 10,48 | % | **D41 1029** |
| **ALLONGEMENT SOUS 10 daN TRAME** | | | < | 64,46 | % | **D41 1029** |
| **ALLONGEMENT SOUS 10 daN CHAINE** | | | < | 20,78 | % | **D41 1029** |
| **DECNIREMENT TRAME** | | | ≥ | 4,9 | DaN | **D45 1126** |
| **DECHIREMENT CHAINE** | | | ≥ | 6,2 | DaN | **D45 1126** |
| **COLORIS** | | | ETALON | LAMA B14 | | **IL 824.22** |
| **COMBUSTIBILITE TRAME** | 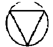 | R | < | B | mm/mn | **D45 1333** |
| **CUOMBUSTIBILITE CHAINE** | 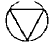 | R | ≤ | C - 53.86 | mm/mn | **D45 1333** |

### ANNEXE 4 : TOILE T7 ELASTIQUE 5 COUCHES A GRILLE (SOAVE)

| **Caractéristique** | | | **Valeur Standard** | **Valeur Calculée** | **UM** | **Methode** |
|---|---|---|---|---|---|---|
| **EPAISSEUR** | | | min max | 0,85 | mm | **IL 824.38** |
| **POIDS** | | | min max | 255 | g/m² | **D45 1012** |
| **SOUPLESSE A LA BOUCLE** | | | min max | | | **D45 1030** |
| **ADHESION TISSU TRAME** | | | ≥ | 2,1 | DaN/5cm | **IL 824.33** |
| **ADHESION FILM TRAME** | | | ≥ | | DaN/5cm | **IL 824.33** |
| **ADHESION TISSU CHAINE** | | | ≥ | 1,6 | DaN/5cm | **IL 824.33** |
| **ADHESION FILM CHAINE** | | | ≥ | | DaN/5cm | **IL 824.33** |
| **RESISTANCE A LA RUPTURE TRAME** | | | ≥ | 44,31 | DaN | **D41 1029** |
| **ALLONGEMENT A LA RUPTURE TRAME** | | | ≤ | 146,2 | % | **D41 1029** |
| **RESISTANCE A LA RUPTURE CHAINE** | | | ≥ | 54,89 | DaN | **D41 1029** |
| **ALLONGEMENT A LA RUPTURE CHAINE** | | | ≤ | 64,1 | % | **D41 1029** |
| **ALLONGEMENT SOUS 5 daN TRAME** | | | ≤ | 31,29 | % | **D41 1029** |
| **ALLONGEMENT SOUS 5 daN CHAINE** | | | ≤ | 3,98 | % | |
| **ALLONGEMENT SOUS 10 daN TRAME** | | | ≤ | 56,06 | % | **D41 1029** |
| **ALLONGEMENT SOUS 10 daN CHAINE** | | | ≤ | 12,39 | % | **D41 1029** |
| **DECHIREMENT TRAME** | | | ≥ | 3,7 | DaN | **D45 1126** |
| **DECHIREMENT CHAINE** | | | ≥ | 4,6 | DaN | **D45 1126** |
| **COLORIS** | | | ETALON | LAMA B14 | | **IL 824.22** |
| **COMBUSTIBILITE TRAME** | 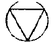 | R | ≤ | B | mm/mn | **D45 1333** |
| **CUOMBUSTIBILITE CHAINE** | 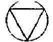 | R | ≤ | B | mm/mn | **D45 1333** |

### ANNEXE 5 : FICHE TECHNIQUE SOAVE (MARQUE DEPOSEE)

| | Valeur Standard | Norme |
|---|---|---|
| Largeur (cm) | > 180 | IL824,24 |
| Poids (g/m²) | 60± 20% | IL824,23 |
| Allongement trame 50% (Kg) | < 1 | IL824,25 |
| Allongement chaîne 50% (Kg) | 15 < F < 25 | IL824,25 |
| Charge à la rupture trame (Kg) | > 10 | IL824,28 |
| Allongement à la rupture trame (%) | > 150 | IL824,28 |
| Charge à la rupture chaîne (Kg) | > 30 | IL824,28 |
| Allongement à la rupture chaîne (%) | > 50 | IL824,28 |
| Aspect | 411 | VISIVO |
| Couleur | 411 | IL824,22 |

### ANNEXE 6 : RAPPORT DE CONTROLE SOAVE

| Date | 20/11/07 | Complexeur RES |
|---|---|---|
| Bain | 72792 | |
| N∞ document | 2321 | |
| Article | SOAVE | |
| QuantitÈ (ml) | 293,0 | |
| ID produit | 18331 | |
| Plan de controle | IL824,13 | |

| Valeur Mesurée | Valeur Standard | Norme |
|---|---|---|
| 182,5 | > 180 | IL824,24 |
| 59,4 | 60±20% | IL824,23 |
| 0,4 | <1 | IL824,25 |
| 20.8 | 15<F<25 | |
| IL824,25 | | |
| 15,1 | >10 | IL824,28 |
| 248,5 | > 150 | IL824,28 |
| 39,9 | > 30 | IL824,28 |
| 68,5 | > 50 | IL824,28 |
| BUONA | 411 | VISIVO |
| BUONA | 411 | IL824,22 |

### COULEUR BLANCHE IGNIFUGEE

Approbation : OK

## Revendications

1. Toile pour store d'occultation d'une surface vitrée d'un véhicule automobile, comprenant au moins trois couches parmi lesquelles :
- une couche extérieure de protection, renvoyant et/ou absorbant les rayons lumineux, destinée à être orientée vers l'extérieur dudit véhicule ;
- une couche intérieure d'habillage, destinée à être orientée vers l'intérieur dudit véhicule ;
- au moins une couche intermédiaire,
au moins une desdites couches intermédiaires présentant une élasticité dans la direction de déploiement de ladite toile ;
**caractérisée en ce que** ladite couche intérieure est élastique, ladite couche intérieure étant réalisée en un matériau élastique et l'élasticité de ladite couche intérieure étant due au moins en partie au tricotage de ladite couche.

2. Toile selon la revendication 1, **caractérisé en ce qu'**au moins une desdites couches présente une élasticité dans deux directions perpendiculaires dites respectivement direction de trame et direction de chaîne.

3. Toile selon l'une quelconque des revendications 1 à 2 **caractérisée en ce qu'**au moins une desdites couches intermédiaires est une grille.

4. Toile selon la revendication 3, **caractérisée en ce que** ladite grille est réalisée dans un matériau élastique.

5. Toile selon l'une quelconque des revendications 3 et 4 **caractérisée en ce que** ladite grille est réalisée en polyester ou en polyéthersulfone.

6. Toile selon l'une quelconque des revendications 3 à 5, **caractérisé en ce que** ladite grille est un tricot en maille cueillie.

7. Toile selon l'une quelconque des revendications 1 à 6, **caractérisée en ce qu'**elle est fabriquée par lamination ou par induction.

8. Toile selon l'une quelconque des revendications 1 à 7, **caractérisée en ce que** ladite toile comprend cinq couches.

9. Store d'occultation pour véhicule automobile **caractérisé en ce qu'**il comprend au moins une toile selon l'une quelconque des revendications 1 à 8.

10. Store d'occultation selon la revendication 9, **caractérisé en ce qu'**il comprend des moyens d'application d'une tension prédéterminée à ladite toile, au moins dans la direction de déploiement de ladite toile.

11. Store d'occultation selon l'une quelconque des revendications 9 et 10, **caractérisé en ce qu'**il comprend au moins une baleine de maintien de ladite toile.

12. Véhicule automobile **caractérisé en ce qu'**il comprend au moins un store d'occultation d'une surface vitrée comprenant au moins une toile selon l'une quelconque des revendications 1 à 8.

## Claims

1. Cloth for an occultation blind for a glazed surface of a motor vehicle, said cloth comprising at least three layers, including:
- an outer, protective layer which reflects and/or absorbs light rays and is intended to be oriented towards the outside of the said vehicle;
- an inner, covering layer which is intended to be oriented towards the interior of the said vehicle; and
- at least one intermediate layer,
at least one of said intermediate layers having elasticity in the direction of deployment of the said cloth;
**characterised in that** said inner layer is elastic, said inner layer being made of an elastic material and the elasticity of said inner layer being at least partly due to the knitting of the said layer.

2. Cloth according to claim 1, **characterised in that** at least one of said layers has elasticity in two perpendicular directions, which are referred to as the "weft direction" and "warp direction" respectively.

3. Cloth according to either of claims 1 or 2, **characterised in that** at least one of said intermediate layers is a grid.

4. Cloth according to claim 3, **characterised in that** said grid is made from an elastic material.

5. Cloth according to either of claims 3 or 4, **characterised in that** said grid is made of polyester or polyethersulfone.

6. Cloth according to any of claims 3 to 5, **characterised in that** said grid is a weft knitted fabric.

7. Cloth according to any of claims 1 to 6, **characterised in that** said cloth is produced by lamination or induction.

8. Cloth according to any of claims 1 to 7, **characterised in that** said cloth comprises five layers.

9. Occultation blind for a motor vehicle, **characterised in that** said blind comprises at least one cloth according to any of claims 1 to 8.

10. Occultation blind according to claim 9, **characterised in that** it comprises means for applying a predetermined tension to said cloth, at least in the direction of deployment of said cloth.

11. Occultation blind according to either of claims 9 or 10, **characterised in that** it comprises at least one stiffener for holding the said cloth in position.

12. Motor vehicle, **characterised in that** it comprises at least one occultation blind for a glazed surface, which blind comprises at least one cloth according to any of claims 1 to 8.

## Patentansprüche

1. Tuch für Rollos zum Verdunkeln einer verglasten Oberfläche eines Kraftfahrzeugs, das wenigstens drei Schichten aufweist, darunter:
- eine äußere Schutzschicht, die die Lichtstrahlen zurückwirft und/oder absorbiert, die dazu bestimmt ist, zur Außenseite des Fahrzeugs hin ausgerichtet zu sein,
- eine innere Verkleidungsschicht, die dazu bestimmt ist, zum Inneren des Fahrzeugs hin ausgerichtet zu sein,
- wenigstens eine Zwischenschicht,
wobei wenigstens eine der Zwischenschichten eine Elastizität in Entfaltungsrichtung des Tuchs aufweist,
**dadurch gekennzeichnet, dass** die innere Schicht elastisch ist, wobei die innere Schicht aus einem elastischen Werkstoff hergestellt ist und die Elastizität der inneren Schicht wenigstens zum Teil auf das Stricken der Schicht zurückzuführen ist.

2. Tuch nach Anspruch 1, **dadurch gekennzeichnet, dass** wenigstens eine der Schichten eine Elastizität in zwei senkrechten Richtungen aufweist, die jeweils Schussrichtung und Kettenrichtung genannt werden.

3. Tuch nach einem der Ansprüche 1 bis 2, **dadurch gekennzeichnet, dass** wenigstens eine der Zwischenschichten ein Gitter ist.

4. Tuch nach Anspruch 3, **dadurch gekennzeichnet, dass** das Gitter aus einem elastischen Werkstoff ausgebildet ist.

5. Tuch nach einem der Ansprüche 3 und 4, **dadurch gekennzeichnet, dass** das Gitter aus Polyester oder aus Polyethersulfon ausgebildet ist.

6. Tuch nach einem der Ansprüche 3 bis 5, **dadurch gekennzeichnet, dass** das Gitter ein Strickgewebe aus Kulierware ist.

7. Tuch nach einem der Ansprüche 1 bis 6, **dadurch gekennzeichnet, dass** es durch Laminieren oder durch Induktion hergestellt wird.

8. Tuch nach einem der Ansprüche 1 bis 7, **dadurch gekennzeichnet, dass** das Tuch fünf Schichten aufweist.

9. Verdunkelungsrollo für Kraftfahrzeug, **dadurch gekennzeichnet, dass** es wenigstens ein Tuch nach einem der Ansprüche 1 bis 8 aufweist.

10. Verdunkelungsrollo nach Anspruch 9, **dadurch gekennzeichnet, dass** er Mittel zum Anlegen einer vorbestimmten Spannung an das Tuch, wenigstens in Entfaltungsrichtung des Tuchs aufweist.

11. Verdunkelungsrollo nach einem der Ansprüche 9 und 10, **dadurch gekennzeichnet, dass** er wenigstens eine Stange zum Halten des Tuchs aufweist.

12. Kraftfahrzeug, **dadurch gekennzeichnet, dass** es wenigstens ein Verdunkelungsrollo einer verglasten Oberfläche aufweist, das wenigstens ein Tuch nach einem der Ansprüche 1 bis 8 aufweist.
